Europäisches Patentamt

European Patent Office

Office européen des brevets

(11) Publication number: **0 293 269 B1**

(12) **EUROPEAN PATENT SPECIFICATION**

(45) Date of publication of patent specification: **12.08.92**  (51) Int. Cl.5: **B29B 9/06,** B29C 47/30

(21) Application number: **88304929.8**

(22) Date of filing: **31.05.88**

(54) **Extrusion die.**

(30) Priority: **29.05.87 JP 136192/87**

(43) Date of publication of application:
**30.11.88 Bulletin 88/48**

(45) Publication of the grant of the patent:
**12.08.92 Bulletin 92/33**

(84) Designated Contracting States:
**DE FR GB SE**

(56) References cited:
**DE-B- 2 517 402**
**US-A- 3 516 120**
**US-A- 4 321 026**

(73) Proprietor: **Moriyama, Masao**
**No. 508-13, Tendocho 17**
**Nishinomiyashi Hyogo 663(JP)**

(72) Inventor: **Moriyama, Masao**
**No. 508-13, Tendocho 17**
**Nishinomiyashi Hyogo 663(JP)**

(74) Representative: **Marlow, Nicholas Simon et al**
**Reddie & Grose 16, Theobalds Road**
**London WC1X 8PL(GB)**

EP 0 293 269 B1

## Description

The present invention relates to an extrusion die used for extruding and molding a plastic material, and more particularly to an extrusion die used for manufacturing plastic pellets.

Conventionally, plastic pellets have been manufactured by cutting a soft plastic material extruded in the form of strings from an extrusion die into predetermined dimensions immediately after extrusion or after the plastic material has been once cooled by water or cold air after extrusion.

When cutting the string-like plastic material extruded from the die into pellets, it is desirable to cut the plastic material immediately after extruded from the die. However, the plastic material in the extruding machine is still hot and liquid. Even though the die has a predetermined thickness, the plastic material immediately after passing through the die is still sticky. Therefore, even though such plastic material can be cut with cutters, plastic pieces thus cut stick to one another due to their adherence.

If the distance between the extruding machine and the cutting position, i.e., the thickness of a flat plate having through-holes, is increased, the plastic material may be sufficiently cooled while it passes through such through-holes. In such arrangement, however, the resistance of the plastic material during its passage through the through-holes is increased to increase the thrust exerted to the rotor shaft of the extruding machine.

Particularly in a material apt to be rapidly solidified with slight decrease in temperature, this problem is prominent, causing power required per pellet unit amount to be considerably increased.

It is an object of the present invention to provide an extrusion die which solves the problem above-mentioned.

The extrusion die in accordance with the present invention includes a first flat plate made of ceramics, and a second flat plate made of metal overlappingly disposed outside of the first flat plate. Through-holes in the second flat plate are coaxial with through-holes in the first flat plate, and have a diameter greater than that of the through-holes in the first flat plate.

In accordance with the present invention, the second flat plate is preferably made of a metallic material which has a low heat conductivity and which is excellent in wear-resisting and corrosion-resisting properties. Stainless steel is the most suitable material.

In accordance with the present invention, a plastic material in a molten condition in an extruding machine passes through the through-holes in the first flat plate of ceramics such that the plastic material is molded to have a predetermined outer diameter. Then, the plastic material passes through the through-holes in the second flat plate having a diameter greater than that of the through-holes in the first flat plate. Since the through-holes in the second flat plate have a greater diameter, the resistance of the plastic material during its passage in the second flat plate is considerably reduced inspite of the progress of solidification thereof. This permits the second flat plate to be made thick, assuring a sufficient cooling.

Figure 1 is a section view of a first embodiment of the present invention;

Figure 2 is a view illustrating the operation of the embodiment in Figure 1; and

Figure 3 is a view of a second embodiment of the present invention, illustrating the operation thereof.

The following description will discuss in more detail the present invention with reference to the attached drawings which show the embodiments thereof by way of example.

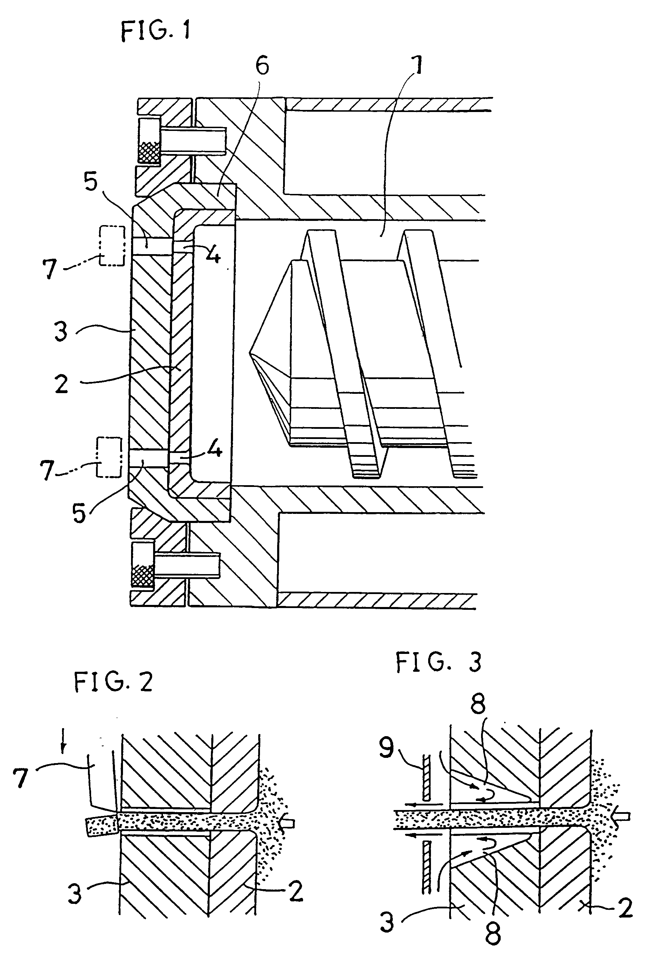

Fig. 1 is a section view of an extrusion die in accordance with a first embodiment of the present invention.

The extrusion die of the present invention is attached to an extruding machine 1 at the tip thereof, and includes a first flat plate 2 made of ceramics, and a second flat plate 3 made of stainless steel overlappingly disposed outside of the first flat plate 2. The first and second flat plates 2 and 3 are provided in the circumferential direction thereof with through-holes 4 and 5, respectively, the through-holes 4 and 5 being coaxial with each other. The second flat plate 3 is provided in a unitary structure at the outer periphery thereof with an inwardly projecting cylindrical frame portion 6. This frame portion 6 is shrink-fitted to a cylindrical portion disposed at the outer periphery of the first flat plate 2. The through-holes 4 in the first flat plate 2 are rounded at the opening peripheries thereof at the side of the extruding machine 1. The through-holes 5 in the second flat plate 3 are coaxial with the through-holes 4 in the first flat plate 2, and have a diameter greater than that of the through-holes 4 in the first flat plate 2. The first flat plate 2 is disposed for regulating the diameter of the string-like plastic material. Therefore, the first flat plate 2 may have a small thickness. The second flat plate 3 is disposed for cooling the plastic material extruded from the extruding machine and needs to have strength capable of withstanding the inner pressure of the extruding machine. Accordingly, the second flat plate has a thickness greater than that of the first flat plate. Beside the through-holes, positioning pins (not shown) are disposed between both flat plates 2 and 3. Disposed outside of the first and second flat plates 2 and 3 are rotary cutters 7 for cutting the extruded plastic material at regular time intervals.

Fig. 2 shows how the plastic material is molded.

After having passed through the through-holes 4 in the first flat plate 2, the plastic material passes through the through-holes 5 in the second flat plate 3 having a diameter greater than that of the through-holes 4 in the first flat plate 2, while being solidified by cooling. The plastic material is then cut by the cutters 7 under rotation. For example, when two rotary cutters are disposed, the plastic material extruded is cut each time the cutters are rotated by 180° or a half revolution. Accordingly, the length of each of the plastic pieces thus cut is obtained by multiplying (the plastic extruding speed) x (time required for the cutters to be rotated by 180°).

Fig. 3 shows a second embodiment of the present invention.

The second embodiment further comprises cooling water passages 8 and a partition plate 9. More specifically, the cooling water passages 8 are disposed for the through-holes in the second flat plate 3. Cooling water is fed into the passages 8 through the inside of the partition plate 9 and discharged from the passages 8 to the outside of the partition plate 9.

The cooling means used in the present invention are not limited to those shown in Fig. 3. There may be also used cooling means of the water cooling type using water shower, or of the air cooling type using blast means.

According to the present invention, a string-like plastic material extruded from an extruding machine is regulated in outer diameter by a first ceramic flat plate excellent in resistance to wear. The plastic material is then cooled by a second metallic flat plate having through-holes having a diameter greater than that of the through-holes in the ceramic flat plate. Accordingly, the plastic material is reduced in resistance and sufficiently cooled. Thus, a durable extrusion die may be obtained.

In particular, when the cylindrical frame portion made of a metallic material and the first flat plate of ceramics are integrally shrink-fitted in tight fit, the ceramic material is enhanced in strength. Accordingly, even though the ceramic flat plate is cracked, it is supported by the frame portion. This prevents the ceramic flat plate from being broken, enabling it to be continuously used.

It should be understood that the present disclosure is for the purpose of illustration only and that this invention includes all modifications and equivalents which fall within the scope of the appended claims.

## Claims

1. Extrusion die adapted to be mounted on an extruding machine (1) at the tip thereof and having a flat plate unit (2, 3) of a predetermined thickness provided with a plurality of through-holes (4, 5),

   characterized in that said flat plate unit includes a first flat plate (2) made of ceramics and a second flat plate (3) made of a metallic material overlappingly disposed outside of said first flat plate, the through-holes (5) in said second flat plate being coaxial with the through-holes (4) in said first flat plate and having a diameter greater than that of the through-holes in said first flat plate.

2. An extrusion die as set forth in Claim 1, wherein the second flat plate (3) is provided in a unitary structure at the outer periphery thereof with an inwardly projecting cylindrical frame portion (6), the inner surface of said cylindrical frame portion being tight-fitted to the outer surface of a cylindrical portion disposed at the periphery of the first flat plate.

3. An extrusion die as set forth in any of Claims 1 and 2, wherein the second flat plate (3) is made of stainless steel.

4. An extrusion die as set forth in any of Claims 1 and 2, wherein the through-holes (4) in the first flat plate (2) are rounded at the opening peripheries thereof at the side of the extruding machine (1).

5. An extrusion die as set forth in any of Claims 1 and 2, further comprising cooling water passages (8) around the through-holes in the second flat plate (3).

## Revendications

1. Filière d'extrusion apte à être montée sur une extrudeuse (1) à la pointe de celle-ci et comprenant un ensemble formant plaque plate (2, 3) d'une épaisseur prédéterminée comportant plusieurs trous traversants (4, 5),

   caractérisée en ce que ledit ensemble formant plaque plate comprend une première plaque plate (2) en céramique et une deuxième plaque plate (3) en une matière métallique disposée en recouvrement à l'extérieur de ladite première plaque plate, les trous traversants (5) de ladite deuxième plaque plate étant coaxiaux avec les trous traversants (4) de ladite première plaque plate et étant d'un diamètre supérieur à celui des trous traversants de ladite première plaque plate.

**2.** Une filière d'extrusion selon la revendication 1, dans laquelle ladite deuxième plaque plate (3) comporte, dans une structure d'un seul tenant, à sa périphérie extérieure, une partie (6) formant cadre cylindrique en saillie vers l'intérieur, la surface intérieure de ladite partie de cadre cylindrique étant en ajustement serré sur la surface extérieure d'une partie cylindrique prévue à la périphérie de la première plaque plate.

**3.** Une filière d'extrusion selon l'une quelconque des revendications 1 et 2, dans laquelle la deuxième plaque plate (3) est en acier inoxydable.

**4.** Une filière d'extrusion selon l'une quelconque des revendications 1 et 2, dans laquelle les trous traversants (4) de la première plaque (2) sont arrondis à la périphérie de leur ouverture tournée du côté de l'extrudeuse (1).

**5.** Une filière d'extrusion selon l'une quelconque des revendications 1 et 2, comprenant en outre des passages (8) d'eau de refroidissement autour des trous traversants de la deuxième plaque plate (3).

**Patentansprüche**

**1.** Extruderdüse zum Anbringen an der Spitze einer Extrudiermaschine (1) mit einer flachen Platteneinheit (2, 3) von vorbestimmter Dicke, die mit mehreren durchgehenden Löchern (4, 5) versehen ist,
dadurch gekennzeichnet, daß zu der genannten flachen Platteneinheit eine erste flache Platte (2) aus Keramik und eine zweite flache Platte (3) aus einem metallischen Material gehören, die überlappend außerhalb der genannten ersten flachen Platte angeordnet ist, wobei die durchgehenden Löcher (5) in der genannten zweiten flachen Platte koaxial mit den durchgehenden Löchern (4) in der genannten ersten flachen Platte angeordnet sind und einen größeren Durchmesser aufweisen als die durchgehenden Löcher in der genannten ersten flachen Platte.

**2.** Extruderdüse nach Anspruch 1, dadurch gekennzeichnet, daß die zweite flache Platte (3) in einer einteiligen Konstruktion an ihrem Außenumfang mit einem nach innen ragenden zylindrischen Rahmenabschnitt (6) versehen ist, wobei die Innenfläche des genannten zylindrischen Rahmenabschnitts mit enger Passung an der Außenfläche eines zylindrischen Abschnitts anliegt, der am Umfang der ersten flachen Platte angebracht ist.

**3.** Extruderdüse nach einem der Ansprüche 1 und 2, dadurch gekennzeichnet, daß die zweite flache Platte (3) aus nichtrostendem Stahl besteht.

**4.** Extruderdüse nach einem der Ansprüche 1 und 2, dadurch gekennzeichnet, daß die durchgehenden Löcher (4) in der ersten flachen Platte (2) auf der Seite der Extrudiermaschine (1) an den Umfängen ihrer Öffnungen abgerundet sind.

**5.** Extruderdüse nach einem der Ansprüche 1 und 2, gekennzeichnet durch um die durchgehenden Löcher der zweiten flachen Platte (3) herum angeordnete Kühlwasserdurchlässe (8).

FIG. 1

FIG. 2

FIG. 3